# EUROPEAN PATENT APPLICATION

(11) **EP 2 863 312 A1**
(43) Date of publication of application: **22.04.2015**
(21) Application number: 14188996.4
(22) Date of filing: 15.10.2014
(51) Int. Cl.: G06F 12/02, G06F 12/06

(54) **Methods and systems for managing heterogeneous memories**

(30) Priority: 16.10.2013 US 201361891637 P; 01.04.2014 US 201414242634
(71) Applicant: Samsung Electronics Co., Ltd, Gyeonggi-do 443-742 (KR)
(72) Inventor: Kim, Boo Jin, 445-701 Hwaseong-si, Gyeonggi-do (KR); Park, Kang Nam, 445-701 Hwaseong-si, Gyeonggi-do (KR); Yoon, Seong Hwan, 445-701 Hwaseong-si, Gyeonggi-do (KR)
(74) Representative: Kuhnen & Wacker

(57) **Abstract**

A system includes a processor and first and second memories coupled to the processor. The first and second memories have a hardware attribute, such as bandwidth, latency and/or power consumption, wherein a first value of the hardware attribute of the first memory is different from a second value of the hardware attribute of the second memory. The system further includes a memory management module configured to receive a memory allocation request. The memory management module is configured to allocate memory space in the first memory or the second memory in response to the memory allocation request based on the values of the hardware attribute of the first memory and the second memory.

## Description

### BACKGROUND

Embodiments of the present inventive concept relate to memory management technology, and more particularly to methods and/or systems for managing heterogeneous memories.

Memory management refers to the management of memory space that is usable by a computer.

The simplest type of memory management is to allocate a region of a memory for use by a program upon request by the program. When the allocated region of the memory is not needed any longer, the memory management can release the allocation so that the region may be used again later. Management of a main memory is essential in a computer system.

### SUMMARY

A technical concept of the invention aims to provide a method for managing heterogeneous memories, which may improve performance and reduce performance deviation by allocating a memory region to be used by an application to one of the heterogeneous memories using hardware attribute of each of the heterogeneous memories, and a system performing the method.

A system includes a processor and first and second memories coupled to the processor. The first and second memories have a hardware attribute, such as bandwidth, latency and/or power consumption, wherein a first value of the hardware attribute of the first memory is different from a second value of the hardware attribute of the second memory. The system further includes a memory management module configured to receive a memory allocation request. The memory management module is configured to allocate memory space in the first memory or the second memory in response to the memory allocation request based on the values of the hardware attribute of the first memory and the second memory.

The values of both the bandwidth and the power consumption of the first memory may be different from the values of the bandwidth and power consumption of the second memory.

The system may further include a first memory controller that controls the first memory and a second memory controller that controls the second memory.

The first and second memory controllers may be implemented in a single chip along with the processor.

The memory allocation request may specify a desired hardware attribute level, and the memory management module may be configured to allocate memory space in the first memory or the second memory based on the desired hardware attribute level specified in the memory allocation request.

The hardware attribute may include one of bandwidth, power consumption and latency.

The memory management module may be configured to allocate memory space in the first memory or the second memory based on an application type of an application that issued the memory allocation request.

The memory management module may be configured to allocate memory space in the first memory or the second memory in response to the memory allocation request based on the values of a plurality of hardware attributes of the first memory and the second memory, and the plurality of hardware attributes may include bandwidth, power consumption and/or latency of the first memory and the second memory.

The memory management module may be configured to allocate memory space in the first memory or the second memory in response to the memory allocation request based on the values of the hardware attribute of the first memory and the second memory, and based on a priority level of an application that issued the memory allocation request.

The memory management module may be configured, in response to determining that memory space should be allocated in the first memory in response to the memory allocation request from a first application having a first priority and determining that there may be not enough free memory space available in the first memory to satisfy the memory allocation request from the first application, to migrate a buffer already allocated in the first memory for a second application having a second priority that may be lower than the first priority to the second memory, and thereafter allocate memory space in the first memory to the first application in response to the memory allocation request.

The memory management module may be further configured to subsequently migrate the buffer allocated for the second application back to the first memory when sufficient memory for the buffer becomes available in the first memory.

The memory management module may be configured, in response to determining that memory space should be allocated in the first memory in response to the memory allocation request from a first application having a first priority and determining that there may be not enough free memory space available in the first memory to satisfy the memory allocation request from the first application, to kill a second application having a second priority that may be lower than the first priority and that may have memory space allocated in the first memory, and thereafter allocate memory space in the first memory to the first application in response to the memory allocation request.

The first memory, the second memory, and the processor may be provided in different semiconductor chips.

The first memory and the processor may be provided in a first package, and the second memory may be provided in a second package that may be separate from the first package.

The first memory may be coupled to the processor by a through silicon via (TSV) interconnection.

The processor and the first memory may be provided in a package on package configuration.

The first memory may have a first bandwidth and the second memory may have a second bandwidth, wherein the first bandwidth may be higher than the second bandwidth.

The first memory may have a first latency and the second memory may have a second latency, wherein the first latency is higher than the second latency.

The first memory may have a first power consumption level and the second memory may have a second power consumption level that may be different from the first power consumption level, and the memory management module may be configured to determine a level of power consumption of the system, and to allocate memory space in the first memory or the second memory in response to the memory allocation request based on the determined level of power consumption of the system, the first power consumption level and the second power consumption level.

The memory management module may store hardware characteristic information that describes a hardware configuration of the system, and the memory management module may be further configured to allocate memory space in the first memory or the second memory in response to the memory allocation request based on the hardware characteristic information.

### BRIEF DESCRIPTION OF THE DRAWINGS

These and/or other aspects and advantages of the present general inventive concept will become apparent and more readily appreciated from the following description of the embodiments, taken in conjunction with the accompanying drawings of which:
FIG. 1 is a block diagram of a system including heterogeneous memories according to an example embodiment of the present inventive concepts;
FIG. 2 is a conceptual diagram that illustrates an example embodiment of a method of managing a memory of the system illustrated in FIG. 1;
FIG. 3 is a conceptual diagram that illustrates another example embodiment of the method of managing a memory of the system illustrated in FIG. 1;
FIG. 4 is a flowchart that illustrates a method of allocating a memory region of the system illustrated in FIG. 1;
FIG. 5A is a flowchart that illustrates an example embodiment of a method of allocating a memory region according to hardware attribute information in the system illustrated in FIG. 1;
FIG. 5B is a flowchart that illustrates another example embodiment of the method of allocating a memory region according to hardware attribute information in the system illustrated in FIG. 1;
FIG. 5C is a flowchart that illustrates another example embodiment of the method of allocating a memory region according to hardware attribute information in the system illustrated in FIG. 1;
FIG. 6 is a conceptual diagram that illustrates a migration operation performed in the system illustrated in FIG. 1;
FIG. 7 is a conceptual diagram that illustrates a killing operation performed in the system illustrated in FIG. 1;
FIG. 8 is a flowchart that illustrates the migration operation and the killing operation illustrated in FIGS. 6 and 7;
FIGS. 9 to 12 are graphs illustrating a deviation of launching time of applications in the related art and a deviation of launching time of applications using a memory management program according to an example embodiment of the present inventive concepts;
FIG. 13 is an example embodiment of a sectional diagram illustrating a structure of the system illustrated in FIG. 1;
FIG. 14 is another example embodiment of the sectional diagram illustrating a structure of the system illustrated in FIG. 1; and
FIG. 15 is still another example embodiment of the sectional diagram illustrating a structure of the system illustrated in FIG. 1.
FIGS. 16A and 16B are graphs that illustrate latency and bandwidth for heterogeneous memories.

### DETAILED DESCRIPTION OF THE EMBODIMENTS

Heterogeneous memories are memories that have different operational characteristics (e.g., flash memory, DRAM, etc.). Although various different kinds of computing systems may support different types of memories, existing memory management schemes may not differentiate between types of available memories when fulfilling a memory allocation request, such as a buffer allocation request. Therefore, a buffer allocation request may result in allocation of memory from anywhere within the entire unused portion of the memory area. That is, in a system having two different types of memories with different characteristics, a buffer allocation request can be satisfied from any portion of the two kinds of memory. In that case, a request for buffer allocation from an application or driver may not be allocated to an area of memory that is best suited for the types of memory accesses that will be made by the application or driver, which can reduce overall performance of the system.

Embodiments of the present inventive concepts provide systems and/or methods that allocate space in different types of memories that take into account the characteristics of the memories.

Embodiments of the present inventive concepts now will be described more fully hereinafter with reference to the accompanying drawings. The inventive concepts may, however, be embodied in many different forms and should not be construed as limited to the embodiments set forth herein. Rather, these embodiments are provided so that this disclosure will be thorough and complete, and will fully convey the scope of the inventive concepts to those skilled in the art. Like numbers refer to like elements throughout.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present inventive concepts. As used herein, the term "and/or" includes any and all combinations of one or more of the associated listed items.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises," "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

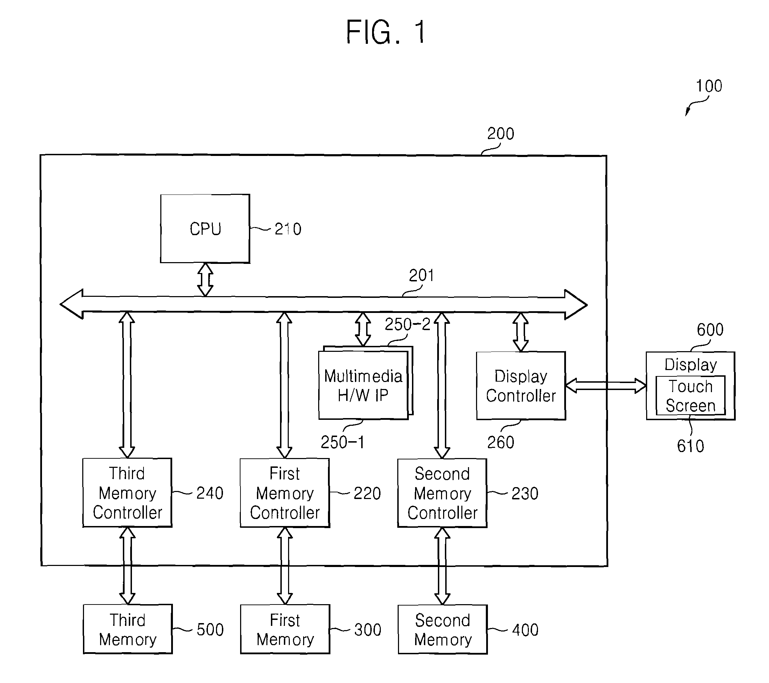

FIG. 1 is a block diagram of a system including heterogeneous memories according to some embodiments of the present inventive concepts. Referring to FIG. 1, a system 100 may be embodied in a personal computer (PC), a server, or a portable electronic device (or a mobile device).

The portable electronic device may be embodied in a laptop computer, a mobile phone, a smart phone, a tablet PC, a personal digital assistant (PDA), an enterprise digital assistant (EDA), a digital still camera, a digital video camera, a portable multimedia player (PMP), a personal navigation device or portable navigation device (PND), a handheld game console, a mobile internet device (MID), a wearable computer, or an e-book.

The system 100 includes a control circuit 200, a first memory 300, a second memory 400, a third memory 500, and a display 600.

The control circuit 200 may control operations of the first memory 300, the second memory 400, the third memory 500, and the display 600. According to example embodiments, the control circuit 200 may be embodied in an integrated circuit (IC) such as an application processor (AP), a system on chip (SoC), hardware, or a printed circuit board (PCB). When the system 100 is embodied in a portable electronic device, the control circuit 200 may be embodied in a mobile AP.

The control circuit 200 includes a bus 201, a central processing unit (CPU) 210, a first memory controller 220, a second memory controller 230, a third memory controller 240, a plurality of multimedia hardware intellectual properties (IPs) 250-1 and 250-2, and a display controller 260.

The CPU 210 may control operations of each component 220, 230, 240, 250-1, 250-2, and 260 via the bus 201. The CPU 210 may be embodied in a multi-core processor including a plurality of cores.

The first memory controller 220 may control an operation of writing a corresponding program and/or corresponding data in the first memory 300 and an operation of reading a corresponding program and/or corresponding data from the first memory 300.

The second memory controller 230 may control an operation of writing a corresponding program and/or corresponding data in the second memory 400 and an operation of reading a corresponding program and/or corresponding data from the second memory 400.

The first memory 300 may be embodied in a memory having a first hardware attribute (or characteristic) and the second memory 400 may be embodied in a memory having a second hardware attribute (or characteristic).

In particular, the first hardware attribute and the second hardware attribute may include bandwidth, latency, and/or power consumption of the memory.

For example, the first memory 300 may be embodied, for example, in a WIDE I/O dynamic random access memory (DRAM). Contents related to the WIDE I/O DRAM are disclosed in detail in "JEDEC STANDARD WIDE I/O SINGLE DATA RATE (WIDE I/O SDR) JESD229, December 2011", which is incorporated herein by reference. For example, a bandwidth of the WIDE I/O DRAM may be 12.8 Gbyte/s; however, a technical concept of the invention is not limited thereto.

The second memory 400 may be embodied, for example, in a low power double data rate (LPDDR) DRAM. Content related to the LPDDR DRAM is disclosed in detail in "JEDEC STANDARD LOW POWER DOUBLE DATE RATE 3 SDRAM (LPDDR3), JESD209-3, May 2012', which is incorporated herein by reference. For example, a bandwidth of the second memory 400 may be 6.4 Gbyte/s; however, the technical concept of the invention is not limited thereto. For example, LPDDR may include LPDDRx (where x is an integer number such as a 1, 2, or 3) DRAM.

As described above, the bandwidth of the first memory 300 may be higher or wider than the bandwidth of the second memory 400. However, a latency of the first memory 300 may be higher than a latency of the second memory 400. In some embodiments, a power consumption of the first memory 300 may be lower than power consumption of the second memory 400.

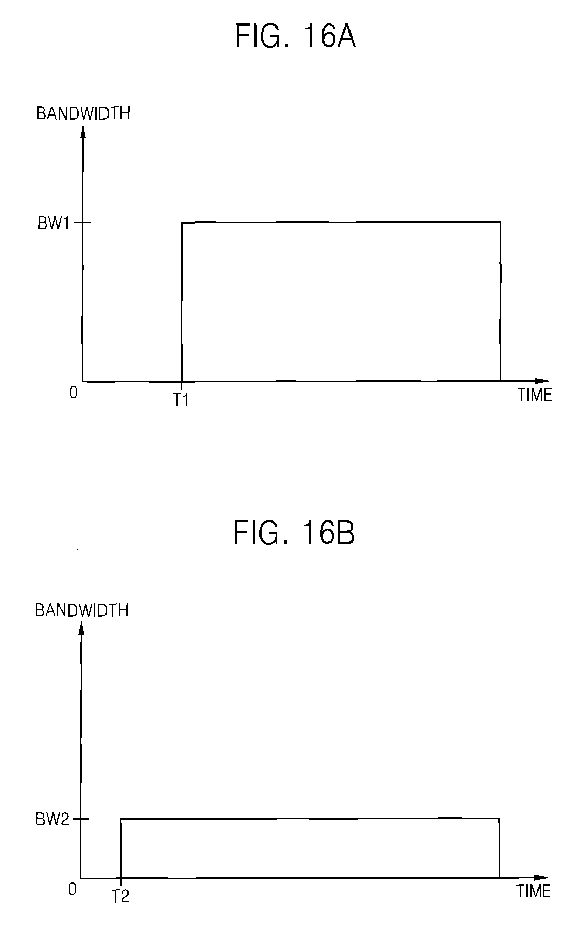

Latency and bandwidth of first and second memories are illustrated in FIGS. 16A and 16B, respectively. Latency refers to the amount of time for a memory to deliver information after a request is made. Thus, a memory that has a fast response time has a "low latency," while a memory that has a slow response time has a "high latency."

Referring to FIG. 16A, assuming a memory access request is made to the first memory 300 at time 0, the first memory has a response time of T1. Thereafter, information is delivered from the first memory 300 at a bandwidth of BW1.

Referring to FIG. 16B, the second memory 400 has a response time of T2. Thereafter, information is delivered from the second memory 400 at a bandwidth of BW2.

Because T1 > T2, the first memory 300 has a higher latency (e.g. a slower response time) than the second memory 400. However, because BW1 > BW2, the bandwidth of data delivered by the first memory 300 is greater than the bandwidth of data delivered by the second memory 400. Thus, relative to one another, the second memory 400 may be characterized as a low latency, low bandwidth memory, while the first memory 300 may be characterized as a high latency, high bandwidth memory. However, the foregoing is only an example, and the present inventive concepts are not limited thereto.

The first memory 300 and the second memory 400 may be used as a main memory (or a primary memory), respectively.

According to some embodiments, each of the first memory 300 and the second memory 400 may be embodied in different types of volatile memories.

A volatile memory may include an existing volatile memory, such as a dynamic random access memory (DRAM), a static random access memory (SRAM), a thyristor RAM (TRAM), a zero capacitor RAM (Z-RAM), or a Twin Transistor RAM (TTRAM). Other types of volatile memories are currently under development.

Referring again to FIG. 1, the first memory 300 and the second memory 400 are illustrated to be separated from each other; however, the first memory 300 and the second memory 400 may be electrically connected to each other by means of through silicon vias (TSVs) or packaged in one package according to some embodiments. According to other embodiments, the package may include the first memory 300 and the second memory 400 stacked on the control circuit 200. For example, an order in which each component 200, 300, and 400 is stacked may be variously modified according to example embodiments.

The third memory controller 240 may control an operation of writing a corresponding program and/or corresponding data in the third memory 500 and an operation of reading a corresponding program and/or corresponding data from the third memory 500.

The third memory 500 may be embodied in an auxiliary (or a secondary) memory device. The third memory 500 may be embodied in a flash-based memory, a multimedia card (MMC), an embedded MMC (eMMC), a universal flash storage (UFS), a solid state drive (SSD), an embedded SSD (eSSD), or a hard disc drive. The third memory 500 may include a set of non-volatile memories. The non-volatile memories may be embodied in the same type of memories or different types of memories.

For convenience of description in FIG. 1, two multimedia hardware circuits 250-1 and 250-2 are illustrated; however, this is only an example.

For example, a multimedia hardware circuit may be embodied in a video codec or a multi format codec (MFC). The video codec denotes hardware which may compress or decompress digital video data.

In addition, the multimedia hardware circuit may be embodied in hardware supporting a JPEG standard, a scaler, a rotator, a hardware accelerator for multimedia, a 3D graphics engine, a 2D graphics engine, or a MP3 player.

The display controller 260 may control an operation of the display 600. For example, the display controller 260 may display multimedia data, e.g., image data or 3D image data, output from one of the plurality of multimedia hardware circuits 250-1 and 250-2.

According to some embodiments, the display controller 260 may include a touch screen or a touch screen panel 610 for a touch input. A user may select an application or a program using the touch screen 610.

According to some embodiments, a touch screen controller (not shown) which may control an operation of the touch screen 610 may be embodied inside the control circuit 200 or inside the display 600.

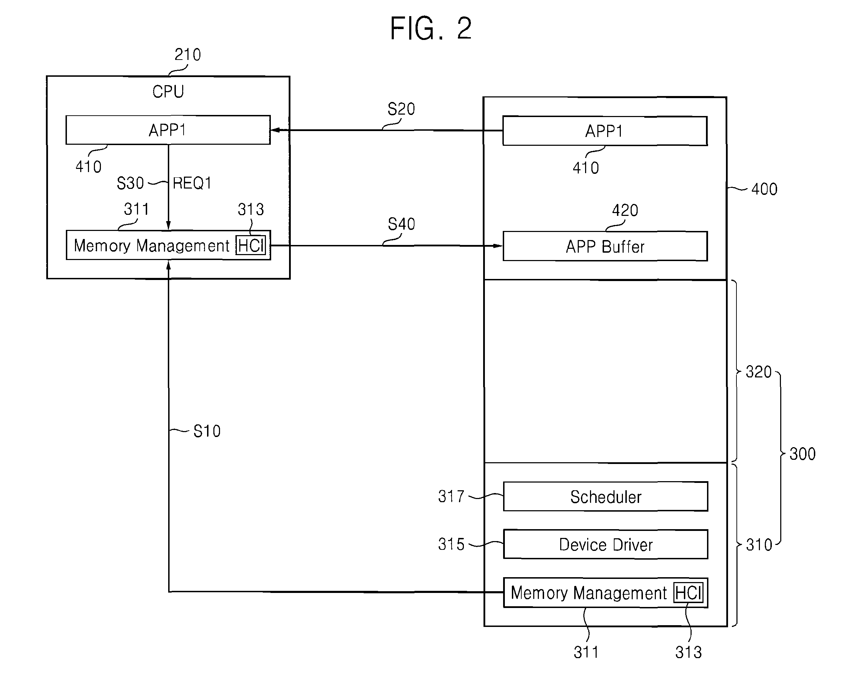

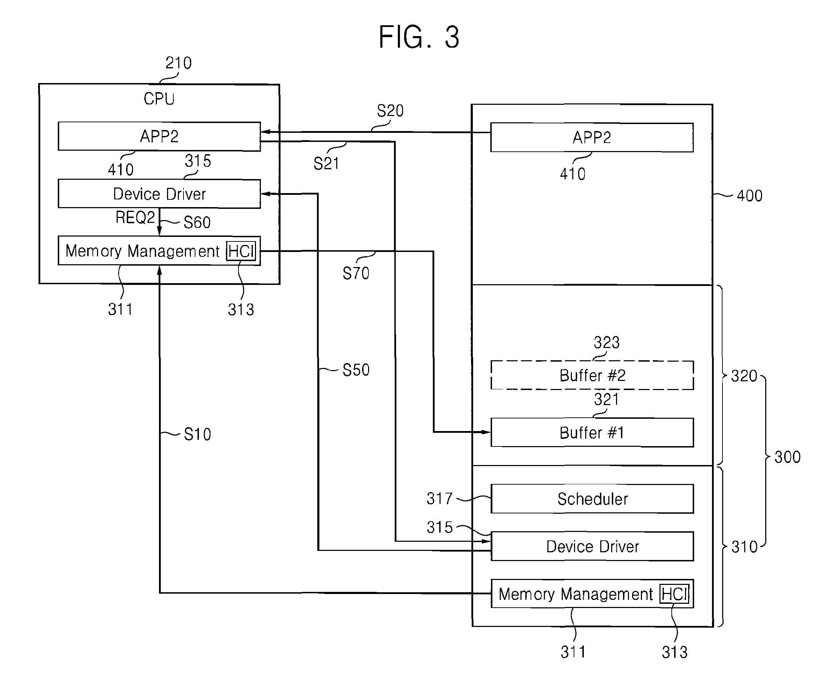

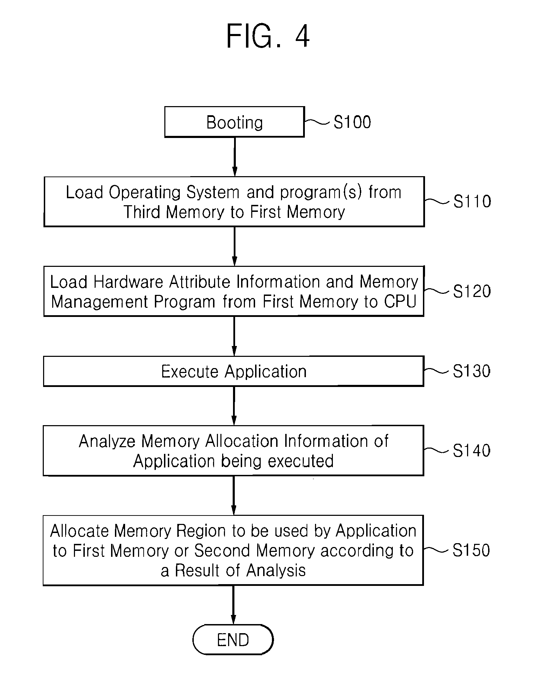

FIG. 2 is a conceptual block diagram that illustrates memory management in the system illustrated in FIG. 1 according to some embodiments, while FIG. 3 is a conceptual block diagram that illustrates memory management in the system illustrated in FIG. 1 according to further embodiments. FIG. 4 is a flowchart that illustrates operations for allocating a memory region of the system illustrated in FIG. 1 according to some embodiments.

Referring to FIGS. 1 to 4, when booting the system 100 (S100), an operating system (OS) and/or program(s) stored in the third memory 500 are loaded to the first memory 300 under the control of the components 210, 220, and/or 240 (S110).

The OS may include Android, Berkeley Software Distribution (BSD), iOS, Linux, OS X, QNX, Symbian, Microsoft Windows, Windows Phone, IBM z/OS or any other suitable operating system.

For example, a kernel OS, a memory management program 311, hardware attribute (characteristic) information 313, at least one device driver 315, and at least one scheduler 317 may be loaded from the third memory 500 to each memory region in a kernel region 310 of the first memory 300 according to a control of the components 210, 220, and/or 240. The first memory 300 includes a kernel region 310, and a user data region 320 which may store user data.

The hardware attribute information 313 may include bandwidth of each memory 300 and 400, latency of each memory 300 and 400, and/or power consumption of each memory 300 and 400, and may be embodied in an updatable table. The hardware attribute information 313 may be loaded from the third memory 500 to a memory region in the kernel region 310 of the first memory 300 according to a control of the components 210, 220, and/or 240.

Then, the memory management program 311 and the hardware attribute information 313 are loaded to the CPU 210 (S120). According to some embodiments, the hardware attribute information 313 is loaded to the CPU 210 by being included in the memory management program 311 or being independent from the memory management program 311. For example, the memory management program 311 and the hardware attribute information 313 may be loaded to an instruction cache of L1 cache in the CPU 210 (S10).

When one or more applications and/or one or more device drivers are executed, the memory management program 311 may perform memory allocation and memory management.

The application may include a first type application which does not require the driving of a corresponding device driver, e.g., a multimedia driver, and a second type application which requires the driving of a corresponding device driver.

Referring to FIG. 2, when a user executes an application 410, e.g., a first type application APP1 (S130), the first type application APP1 stored in the second memory 400 is loaded into the CPU 210 (S20). For example, the first type application APP1 may be loaded to the instruction cache of an L1 cache (S20).

According to some embodiments, the first type application APP1 may be stored in the first memory 300, the second memory 400, the third memory 500, or a memory (not shown), and then may be loaded to the CPU 210 when the first type application APP1 is executed. For convenience of description in FIG. 2, it is assumed that the first type application APP1 is stored or installed in the second memory 400.

The first type application APP1 loaded to the CPU 210 requests the memory management program 311 for an allocation of a first memory region (or a buffer) to be used by the first type application APP1 (S30). That is, the first type application APP1 outputs a first memory region allocation request REQ1 to the memory management program 311.

According to some embodiments, the first memory region allocation request REQ1 may include information on a size of the first memory region to be used by the first type application APP 1.

According to other embodiments, the first memory region allocation request REQ1 may include information on a size of the first memory region to be used by the first type application APP1 and information on hardware attribute information of a memory 300 or 400 including the first memory region. The hardware attribute information may include information on bandwidth, latency, and/or power consumption of a memory to be used by the first application APP1.

The memory management program 311 analyzes first memory allocation information of the first application APP1 being executed (S140). The first memory allocation information may include the hardware attribute information 313 and/or the first memory region allocation request REQ1. For example, the memory management program 311 may analyze the hardware attribute information 313 and/or the first memory region allocation request REQ1 in response to the first memory region allocation request REQ1.

The memory management program 311 may determine which one of the first memory 300 and the second memory 400 to allocate the first memory region to based on a result of the analysis on the first memory allocation information (S150).

When the first type application APP1 is an application requiring a fast response, the memory management program 311 may allocate the first memory region 420 to the second memory 400 having a low latency (S40).

However, as illustrated in FIG. 3, when a user executes a second type application APP2 410 that requires a device driver 315, the second type application APP2 stored or installed in the second memory 400 is loaded to the CPU 210 (S20). The second type application APP2 loaded in the CPU 210 may call or drive the device driver 315 stored in the first memory 300 (S21).

By a request of the second type application APP2, the device driver 315 is loaded from the first memory 300 to the CPU 210 (S50). For example, the second type application APP2 and the device driver 315 may be loaded to the instruction cache of the L1 cache (S50). According to some embodiments, the device driver 315 stored in the first memory 300, the third memory 500, or a memory (not shown) may be loaded to the CPU 210 when the second type application APP2 is executed (S50). For convenience of description in FIG. 3, it is assumed that the device driver 315 is stored or installed in the kernel region 310 of the first memory 300. The device driver 315 is a program capable of driving at least one of the multimedia circuits 250-1 and 250-2.

The device driver 315 loaded to the CPU 210 requests the memory management program 311 for an allocation of a second memory region (or a buffer) to be used by a multimedia circuits 250-1 or 250-2 corresponding to the device driver 315 (S60). That is, the device driver 315 outputs the second memory region allocation request REQ2 to the memory management program 311.

According to some embodiments, the second memory region allocation request REQ2 may include information on a size of the second memory region to be used by the multimedia circuit 250-1 or 250-2 corresponding to the device driver 315.

According to further embodiments, the second memory region allocation request REQ2 may include information on a size of the second memory region to be used by the multimedia circuits 250-1 or 250-2 corresponding to the device driver 315 and hardware attribute information on a memory 300 or 400 including the second memory region.

The hardware attribute information may include bandwidth, latency, and/or power consumption of a memory to be used by the multimedia circuits 250-1 or 250-2 corresponding to the device driver 315.

The memory management program 311 analyzes second memory allocation information of the device driver 315 which is executed (S140). The second memory allocation information may include the hardware attribute information 313 and/or the second memory region allocation request REQ2. The memory management program 311 may determine to which one of the first memory 300 and the second memory 400 to allocate the second memory region based on a result of the analysis on the second memory allocation information (S150).

When the device driver 315 or the multimedia circuits 250-1 or 250-2 corresponding to the device driver 315 requires high or wide bandwidth, the memory management program 311 may allocate the second memory region 321 to the first memory 300 providing a high or wide bandwidth (S70).

An application, a device driver executed by the application, and a multimedia circuit driven by the device driver are related to each other, so that to allocate a memory region to be used by the application to one of heterogeneous memories in this specification may be broadly interpreted to include a case (1) of allocating the memory region for the application, a case (2) of allocating the memory region for the device driver, and a case (3) of allocating the memory region for the multimedia circuit.

The multimedia circuit 250-1 or 250-2 may process multimedia data stored in the second memory region 321, and write the processed multimedia data in another memory region 323 of the first memory 300.

As described above, the memory management program 311 may analyze memory allocation information of a corresponding component 410 or 315, e.g., a type of the application APP1 or APP2, the hardware attribute information 313, and a memory allocation request REQ1 or REQ2 output from a corresponding component 410 or 315, and allocate a memory region 321 or 420 to be used by a corresponding component 410, 315, 250-1 or 250-2 to the first memory 300 or the second memory 400 according to a result of the analysis.

Accordingly, the system 100 executing the memory management program 311 may allocate one of heterogeneous memories 300 and 400 to a memory to be used by a corresponding component 410, 315, 250-1, or 250-2 in response to hardware attribute information of the heterogeneous memories 300 and 400 and a memory region allocation request REQ1 or REQ2 output from a corresponding component 410 or 315, thereby improving performance of the system 100 and/or reducing a deviation of launching time of the application 410. The launching time may be time for loading the application 410 to the CPU 210 or allocating a memory region to be used by the application 410.

According to further embodiments, when a user executes the first type application or the second type application, the first type application or the second type application stored in the first memory 300, the second memory 400, or a memory not illustrated may be loaded to the CPU 210. For example, the first type application or the second type application may be loaded to the instruction cache of the L1 cache.

In this case, the memory management program 311 may analyze information on a memory region to be used by the first type application or the second type application, and hardware attribute information on the memory 300 or 400 including the memory region even though there is no request for an allocation of a memory region from the first type application or the second type application.

The hardware attribute information may include information on bandwidth of the memory 300 or 400, latency of the memory 300 or 400, and/or power consumption of the memory 300 or 400, and information on the memory region may include bandwidth of a memory 300 or 400 including a memory region to be used by the first type application or the second type application, latency of the memory 300 or 400, and /or power consumption of the memory 300 or 400.

The memory management program 311 may determine which memory to allocate the memory region to among the first memory 300 and the second memory 400 based on a result of the analysis on the memory 300 or 400 and a result of the analysis on the memory region.

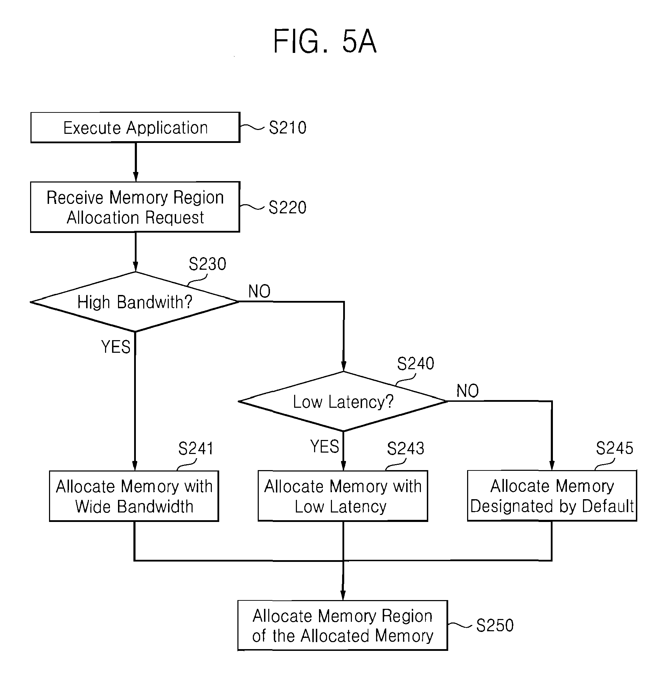

FIG. 5A is a flowchart for describing an example embodiment of a method of allocating a memory region according to hardware attribute information in the system illustrated in FIG. 1. Referring to FIGS. 1 to 5A, when the application 410 is selected by a user and executed by the CPU 10 (S210) after booting the system 100, the application 410 being executed is loaded from the second memory 400 to the CPU 210. As described above, the application 410 being executed may be the first type application APP1 or the second type application APP2. Moreover, the application 410 may be loaded from the first memory 300, the second memory 400, the third memory 500, or a memory not illustrated to the CPU 210.

The first type application APP1 or the device driver 315 may output the memory region allocation request REQ1 or REQ2 to the memory management program 311, and the memory management program 311 may analyze the hardware attribute information 313 in response to the memory region allocation request REQ1 or REQ2 (S220).

As a result of the analysis, when a memory region to be used by the first type application APP1 or the multimedia circuit 250-1 or 250-2 corresponding to the device driver 315 requires a high bandwidth (YES in S230), the memory management program 311 may allocate the memory region to a memory having a relatively high bandwidth between the heterogeneous memories 300 and 400, e.g., the first memory 300.

However, when the memory region to be used by the first type application APP1 or the multimedia circuit 250-1 or 250-2 corresponding to the device driver 315 requires a fast response more than a high bandwidth (NO in S230 and YES in S240), the memory management program 311 may allocate the memory region for a memory having a relatively fast response (e.g., a low latency) between the heterogeneous memories 300 and 400, e.g., the second memory 400 (S243).

When the memory region to be used by the first type application APP1 or the multimedia circuit 250-1 or 250-2 corresponding to the device driver 315 requires neither a bandwidth nor a response (NO in S230 and NO in S240), the memory management program 311 may allocate the memory region to a memory designated by default among the heterogeneous memories 300 and 400 (S245).
The memory management program 311 according to an example embodiment of the present inventive concepts may not only set the memory region to be dynamically used by the first type application APP1 or the multimedia circuit 250-1 or 250-2 corresponding to the device driver 315 during run-time to one of the heterogeneous memories 300 and 400, but also perform a static allocation.

Static allocation means that the memory region to be used by the multimedia circuit corresponding to the device driver, e.g., a multimedia driver, is allocated during compile time to a memory having a relatively high bandwidth among the heterogeneous memories 300 and 400, and that the memory used by the first type application APP1 is allocated to a memory having a relatively low latency among the heterogeneous memories 300 and 400.

For example, when the second type application APP2 is an MP3 player that requires low power, the memory management program 311 may allocate a memory region to be used by a MP3 player or a multimedia circuit 250-1 or 250-2 corresponding to the MP3 player to the first memory 300.

Moreover, when the second type application APP2 is video player requiring a low power and a high bandwidth, the memory management program 311 may allocate a memory region to be used by a video player or a multimedia circuit 250-1 or 250-2 corresponding to the video player to the first memory 300. However, when the first type application APP1 is an application requiring a fast response, e.g., a web browser, the memory management program 311 may allocate a memory region to be used by the web browser to the second memory 400.

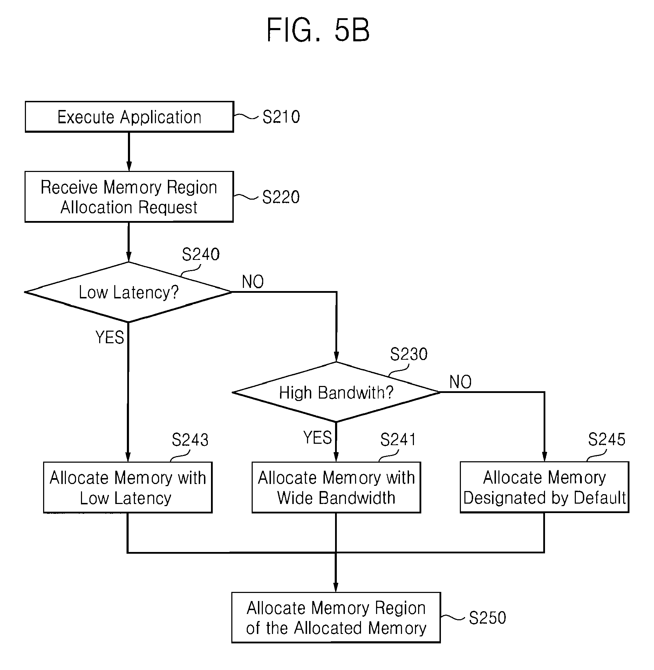

FIG. 5B is a flowchart for describing further embodiments of the method of allocating a memory region according to hardware attribute information in the system illustrated in FIG. 1.

In FIG. 5A, a latency requirement (or request) condition is determined after a bandwidth requirement condition is determined for an allocation of a memory region. In contrast, in FIG. 5B, the bandwidth requirement condition is determined after the latency requirement condition is determined for the allocation of the memory region.

According to some embodiments, in order to allocate a memory region, which of three requirement conditions, e.g., a bandwidth requirement condition, a latency requirement condition, and a power consumption requirement condition, will be considered first, second, and third can be variously modified according to a design of the system 100. Accordingly, the power consumption requirement condition can be determined first in some embodiments.

According to some embodiments, when a memory designated by default is allocated (S245), an order or a process to determine whether there is room (or memory space) in the memory designated by default may be added to the three requirement conditions. Accordingly, when there is room in a memory designated by default, the memory management program 311 may allocate a memory designated by default among the heterogeneous memories 300 and 400, and when there is no room in the memory designated by default, the memory management program 311 may allocate a memory having room among the heterogeneous memories 300 and 400.

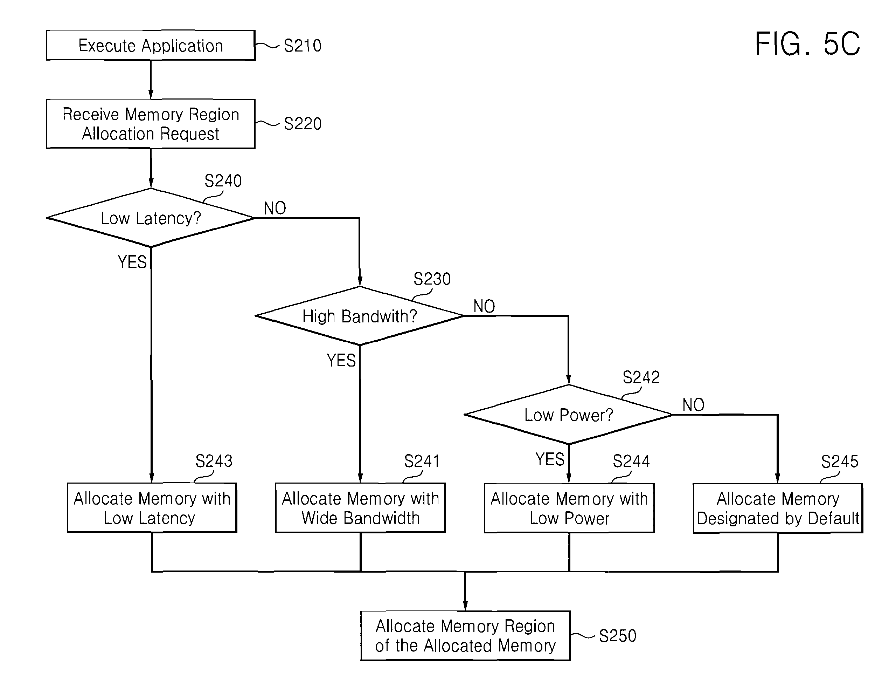

FIG. 5C is a flowchart that illustrates further embodiments of the method of allocating a memory region according to hardware attribute information in the system illustrated in FIG. 1. The operations illustrated in FIG. 5C are similar to those illustrated in FIG. 5B, except that in FIG. 5C, an extra determination is made as to whether the memory space should be allocated to a memory having low power. That is, after determining at block S240 that a low latency memory is not required for the memory allocation and determining at block S230 that a high bandwidth memory is not required for the memory allocation, the operations then determine if a low power memory is required for the memory allocation (S242). If so, memory space is allocated in a memory having a low power hardware characteristic (S244). Otherwise, memory space is allocated in a default memory (S245).

As noted above, the order of the determinations in blocks S230, S240 and S242 can be changed from that shown in FIG. 5C without departing from the scope of the inventive concepts.

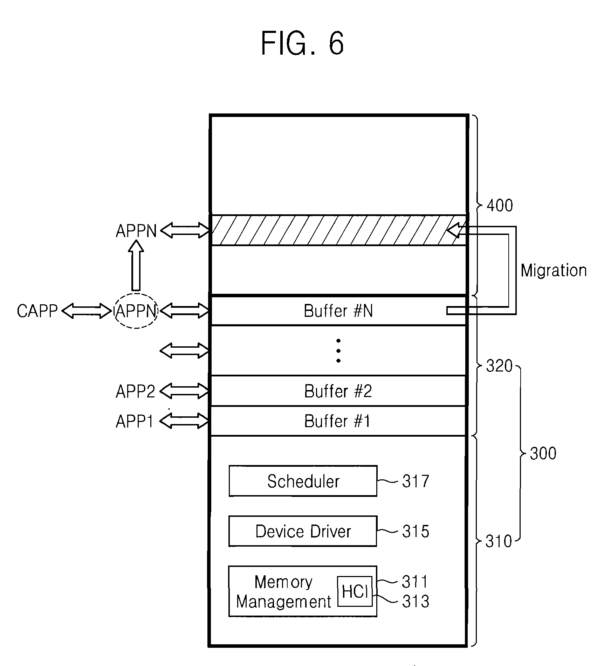

FIG. 6 is a conceptual diagram that illustrates a migration operation performed in the system illustrated in FIG. 1. When the memory management program 311 manages a free memory region, the free memory region may be preferentially managed in the first memory 300 which has a good hardware attribute.

For example, when each memory region Buffer #1 to Buffer #N in the first memory 300 is allocated for each application APP1 to APPN in advance, and a memory region to be used by an application CAPP which is currently executed is not allocated to the first memory 300 but allocated to the second memory 400, the memory management program 311 may select inactive data among data stored in each memory region Buffer #1 to Buffer #N allocated for each application APP1 to APPN in advance, and migrate the selected data to the second memory 400.

Here, the inactive data may be data which are stored in the first memory 300 but are not currently used, or which has not been used for the longest time among unused data.

According to further embodiments, the inactive data may be data corresponding to an application having the lowest allocation priority to the first memory 300 among applications APP1 to APPN corresponding to memory regions allocated to the first memory 300. An allocation priority for the first memory 300 may be determined when allocating a corresponding memory region to the first memory 300 by the memory management program 311 or determined when each application APP1 to APPN outputs a memory region allocation request to the memory management program 311.

As illustrated in FIG. 6, when the memory management program 311 intends to allocate a memory region to be used by an application CAPP which is currently performed to the first memory 300, the memory management program 311 may migrate data stored in a memory region Buffer #N allocated for a Nth application APPN to the second memory 400. According to a result of the migration, a free memory region Buffer #N is generated. Therefore, the memory management program 311 may allocate or reclaim at least a portion of the free memory region Buffer #N to a memory region to be used by the application which is currently executed.

However, when the memory region to be used by the application CAPP that is currently being executed is not enough for data stored in one memory region and migrated, the memory management program 311 may secure a free memory region by migrating data for the application CAPP may be stored in memory regions allocated for at least two applications.

After the data in the Buffer #N for APPN has been migrated to the second memory 400, additional memory space may be freed up in the first memory 300 when, for example, an application that has reserved memory space in the first memory is terminated, killed, or otherwise relinquishes its allocated memory space. In that case, the memory management program 311 may move the Buffer #N back to the first memory 300 into the newly freed memory space.

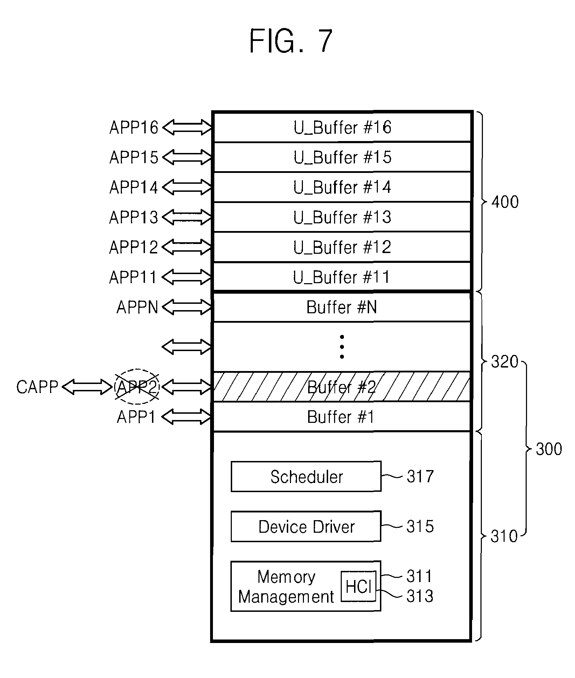

FIG. 7 is a conceptual diagram that illustrates a killing operation performed in the system illustrated in FIG. 1. Each memory region U_Buffer #11 to U_Buffer #16 of the second memory 400 is already allocated for respective applications APP11 to APP16. Each application APP11 to APP16 may be a first type application or a second type application.

When each memory region Buffer #1 to Buffer #N of the first memory 300 is already allocated for each application APP1 to APPN, and a memory region to be used by the application CAPP which is currently executed may not be allocated to each of the first memory 300 and the second memory 400, that is, when there is no room (or memory space) in the first memory 300 and the second memory 400, the memory management program 311 may stop execution of at least one of applications APP1 to APPN using the memory regions Buffer #1 to Buffer #N. The memory management program 311 may log a size of each memory region Buffer #1 to Buffer #N allocated for each application APP1 to APPN.

The memory management program 311 may select at least one application to be stopped or killed based on the allocation priority of each application APP1 to APPN and the size of each memory region Buffer #1 to Buffer #N allocated for each application APP1 to APPN. For example, the memory management program 311 may preferentially select an application which has a low priority and is allocated to a large memory region, e.g., APP2, as an application to stop or to kill.

As the performance of one or more applications is stopped or killed, one or more memory regions are freed.

As illustrated in FIG. 7, when the memory management program 311 intends to allocate the memory region to be used by a currently executed application CAPP to the first memory 300, the memory management program 311 may stop execution of the second application APP2 to secure a memory region Buffer#2 allocated for the second application APP2 as a free memory region. Accordingly, the memory management program 311 may allocate or reclaim at least a portion of the free memory region Buffer#2 to a memory region to be used by the application CAPP which is currently being executed.

FIGS. 6 and 7 describe a case that a memory region to be used by the application CAPP which is currently executed is allocated to the first memory 300. However, when the application CAPP which is currently executed is allocated to the second memory 400, the inactive data stored in the second memory 400 may be migrated to the first memory 300 or at least one application to be stopped or killed may be selected based on an allocation priority of each application APP11 to APP16 and a size of each memory region U_Buffer #11 to U_Buffer #16 allocated for each application APP11 to APP16.

For example, the memory management program 311 may preferentially select an application which has a low allocation priority and is allocated to a large memory region as an application to be stopped.

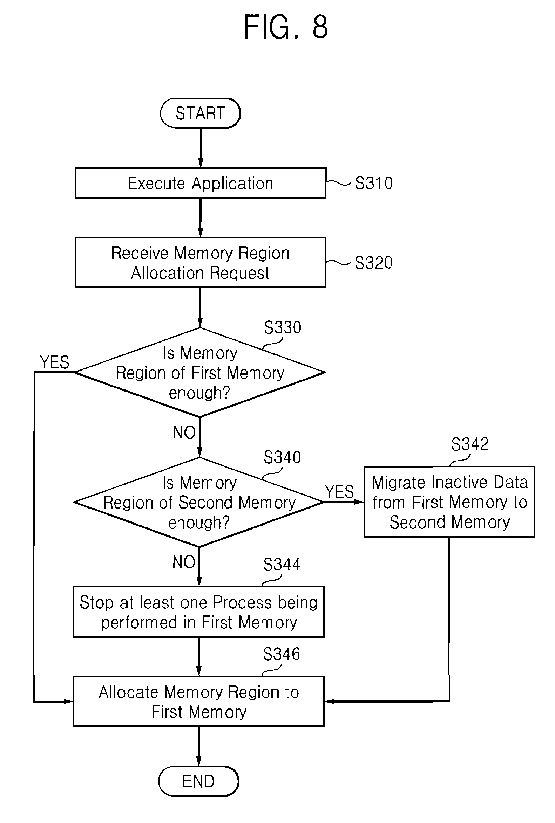

FIG. 8 is a flowchart that further illustrates the migration operation and the killing operation described in connection with FIGS. 6 and 7. Referring to FIGS. 6 to 8, when the first type application APP1 or the device driver 315 is executed (S310), the first type application APP1 is loaded from the second memory 400 to the CPU 210, and the device driver 315 is loaded from the first memory 300 to the CPU 210. According to some embodiments, the first type application APP1 may be loaded from the second memory 400 to the CPU 210. As described above, the first type application, the second type application, or the device driver may be loaded from a memory storing the same to the CPU 210.

The first type application APP1 or the device driver 315 transmits the memory region allocation request REQ1 or REQ2 to the memory management program 311. The memory management program 311 receives the memory region allocation request REQ1 or REQ2, and analyzes memory allocation information including the hardware attribute information 313 and/or the memory region allocation request REQ1 or REQ2 (S320).

The memory management program 311 preferentially scans the first memory 300 so as to allocate a memory region to be used by the first type application APP1 or the multimedia circuit 250-1 to 250-2 corresponding to the device driver 315 to one of the heterogeneous memories 300 and 400.

A determination is made as to whether the available space in the first memory is sufficient to accommodate the allocation request (S330). When the memory region to be used by the first type application APP1 or the multimedia circuit 250-1 or 250-2 corresponding to the device driver 315 can be fully allocated to the first memory 300 (YES in S330), the memory management program 311 allocates the memory region to be used by the first type application APP1 or the multimedia circuit 250-1 or 250-2 corresponding to the device driver 315 to the first memory 300 (S346). However, when the memory region to be used by the first type application APP1 or the multimedia circuit 250-1 or 250-2 corresponding to the device driver 315 cannot be fully allocated to the first memory 300 (NO in S330), the memory management program 311 scans the second memory 400.

When the memory region to be used by the first type application APP1 or the multimedia circuit 250-1 or 250-2 corresponding to the device river 315 can be fully allocated to the second memory 400 (YES in S340), the memory management program 311 migrates inactive data from the first memory 300 to the second memory 400 as described referring to FIG. 6 (S342). According to the migration, a free memory region may be generated in the first memory 300.

The memory management program 311 allocates the memory region to be used by the first type application APP1 or the multimedia circuit 250-1 to 250-2 corresponding to the device driver 315 to the free memory region of the first memory 300 (S346).

When the memory region to be used by the first type application APP1 or the multimedia circuit 250-1 or 250-2 corresponding to the device driver 315 cannot be fully allocated to the second memory 400 (NO in S340), the memory management program 311 stops or kills at least one process which is performed in the first memory 300, i.e., the second type application APP2 or the multimedia circuit 250-1 or 250-2 corresponding to the device driver 315 using a memory region of the first memory 300 as described referring to FIG. 7 (S344).

As a result of the stop or kill operation, a free memory region is generated in the first memory 300.

The memory management program 311 allocates the memory region to be used by the first type application APP1 or the multimedia circuit 250-1 or 250-2 corresponding to the device driver 315 to the free memory region of the first memory 300 (S346).

According to some embodiments, when the memory management program 311 receives a memory region allocation request REQ1 or REQ2 and the application APP1 or APP2 is executed instead of analyzing memory allocation information (S320) including the hardware attribute information 313 and the memory region allocation request REQ1 or REQ2, the memory management program 311 may analyze the hardware attribute information 313 and information on a bandwidth, latency, and/or power consumption of the memory 300 or 400 which is necessary for execution of the application APP1 or APP2.

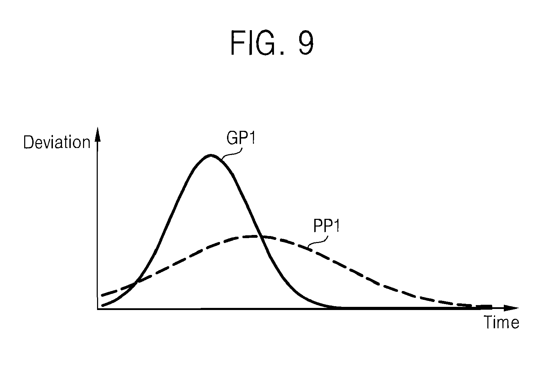

FIGS. 9 to 12 are graphs illustrating deviation of launching time of applications in the related art and deviation of launching time of applications using a memory management program according to some embodiments of the present inventive concepts.

FIG. 9 illustrates launching time of a music player and a deviation of the launching time. GP1 illustrates launching time of the music player in the system 100 including the memory management program 311, and PP1 illustrates launching time of a music player in a system which does not include the memory management program 311.

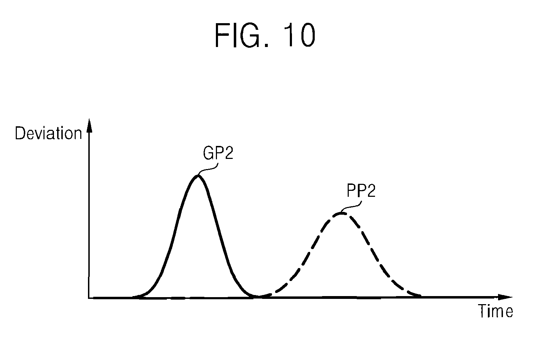

FIG. 10 illustrates launching time of a web browser and a deviation of the launching time. GP2 illustrates launching time of a web browser in the system 100 including the memory management program 311, and PP2 illustrates launching time of a web browser in a system which does not include the memory management program 311.

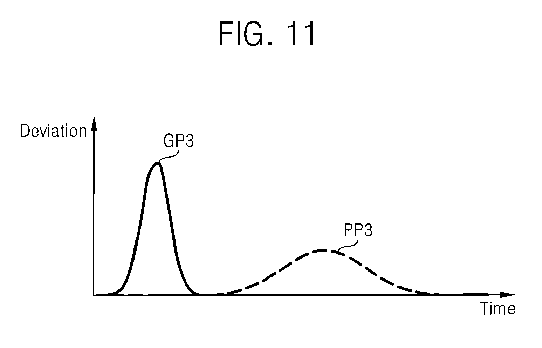

FIG. 11 illustrates launching time of a calculator and a deviation of the launching time. GP3 illustrates launching time of a calculator in the system 100 including the memory management program 311, and PP3 illustrates launching time of a calculator in a system which does not include the memory management program 311.

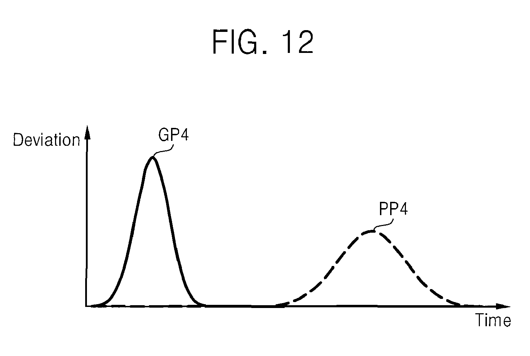

FIG. 12 illustrates launching time of a gallery and a deviation of the launching time. GP4 illustrates launching time of a gallery in the system 100 including the memory management program 311, and PP4 illustrates launching time of a gallery in a system which does not include the memory management program 311.

Referring to FIGS. 9 to 12, the memory management program 311 may reduce launching time of applications and/or may reduce a deviation of the launching time.

A memory allocation method of a system according to some embodiments of the present inventive concepts may be embodied in a computer program product including a computer-readable recording medium which records a computer-readable program. In addition, the memory allocation method of the system according to an example embodiment of the present inventive concepts may be stored in a computer-readable recording medium. The recording medium may be the first memory 300, the third memory 500, or an instruction cache of L1 cache in CPU210.

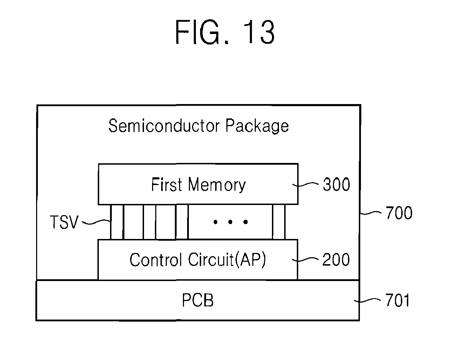

FIG. 13 is an example embodiment of a sectional diagram illustrating a structure of the system illustrated in FIG. 1. Referring to FIGS. 1 and 13, the control circuit 200 is an AP, and the first memory 300 is a WIDE I/O DRAM. FIG. 13 illustrates a semiconductor package 700 which directly connects the AP 200 with the WIDE I/O DRAM 300 by die-to-die. The semiconductor package 700 may not include third memory 500 and the display 600.

The semiconductor package 700 illustrated in FIG. 13 directly connects the AP 200 with the WIDE I/O DRAM 300 by not using a Package on Package (PoP) method which packages the AP 200 and the WIDE I/O DRAM 300, respectively, and then packages them again, but using a through silicon vias (TSVs) technology. Referring to FIG. 13, the semiconductor package 700 includes the AP 200 formed on a printed circuit board (PCB) 701, and the AP 200 and the WIDE I/O DRAM 300 are connected to each other through the TSV.

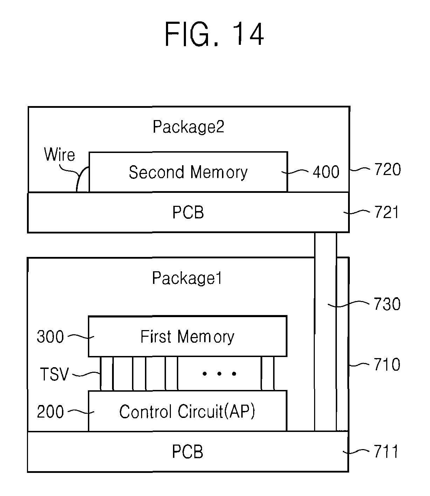

FIG. 14 is another example embodiment of the sectional diagram illustrating a structure of the system illustrated in FIG. 1. FIG. 14 illustrate a PoP stacking an LPDDR DRAM 400 on a semiconductor package 710 which is similar to the semiconductor package 700 illustrated in FIG. 13. Referring to FIG. 14, the PoP stacks a second package 720 on the first package 710. The PoP may not include third memory 500 and the display 600.

Except connection means 730, the package 700 of FIG. 13 is substantially the same as the first package 710 of FIG. 14 in a structure. The second package 720 includes the LPDDR DRAM 400 formed on a PCB 721, and the PCB 721 and the LPDDR DRAM 400 are connected to each other through a wire. The connection means 730 electrically connects a PCB 711 of the first package 710 and a PCB 721 of the second package 720.

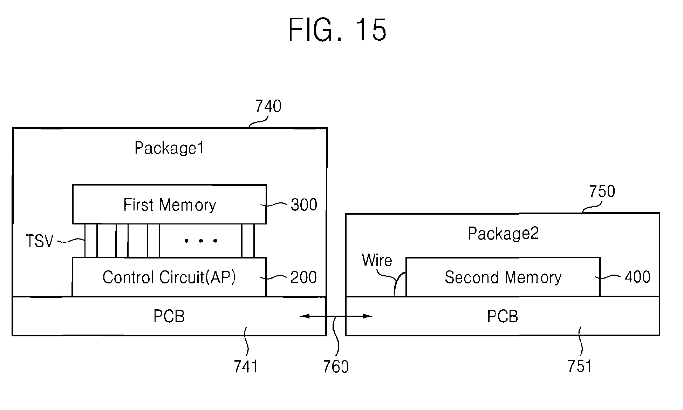

FIG. 15 is still another example embodiment of the sectional diagram depicting a structure of the system illustrated in FIG. 1. Referring to FIG. 15, a first package 740 and a second package 750 are mounted on the board, respectively. Referring to FIG. 15, the AP 200 and the WIDE I/O DRAM 300 of the first package 740 are connected to each other through TSVs, and a PCB 751 and the LPDDR DRAM 400 of the second package 750 are connected to each other through a wire. The first package 740 an the second package 750 are electrically connected to each other through a signal line 760.

Methods according to embodiments of the present inventive concepts and systems performing the methods may improve performance of a computing system and/or may reduce a performance deviation by allocating a memory region to be used by an executed application to one of heterogeneous memories using hardware attribute of each of the heterogeneous memories.

Some embodiments are described herein with reference to flowchart illustrations and/or block diagrams of methods, systems and computer program products. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable memory that can direct a computer or other programmable data processing apparatus to function in a particular manner, such that the instructions stored in the computer readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

It is to be understood that the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved. Although some of the diagrams include arrows on communication paths to show a primary direction of communication, it is to be understood that communication may occur in the opposite direction to the depicted arrows.

Many different embodiments have been disclosed herein, in connection with the above description and the drawings. It will be understood that it would be unduly repetitious and obfuscating to literally describe and illustrate every combination and subcombination of these embodiments. Accordingly, all embodiments can be combined in any way and/or combination, and the present specification, including the drawings, shall be construed to constitute a complete written description of all combinations and subcombinations of the embodiments described herein, and of the manner and process of making and using them, and shall support claims to any such combination or subcombination.

In the drawings and specification, there have been disclosed typical embodiments and, although specific terms are employed, they are used in a generic and descriptive sense only and not for purposes of limitation, the scope of the inventive concepts being set forth in the following claims.

## Claims

1. A system, comprising:
a processor;
first and second memories coupled to the processor, wherein the first and second memories have a hardware attribute, wherein a first value of the hardware attribute of the first memory is different from a second value of the hardware attribute of the second memory; and
a memory management module configured to receive a memory allocation request;
wherein the memory management module is configured to allocate memory space in the first memory or the second memory in response to the memory allocation request based on the values of the hardware attribute of the first memory and the second memory.

2. The system of Claim 1, wherein the values of both the bandwidth and the power consumption of the first memory are different from the values of the bandwidth and power consumption of the second memory.

3. The system of Claim 1 or 2, further comprising a first memory controller that controls the first memory and a second memory controller that controls the second memory.

4. The system of Claim 3, wherein the first and second memory controllers implemented in a single chip that includes the processor.

5. The system of any one of Claims 1 to 4, wherein the memory allocation request specifies a desired hardware attribute level, and wherein the memory management module is configured to allocate memory space in the first memory or the second memory based on the desired hardware attribute level specified in the memory allocation request.

6. The system of any one of Claims 1 to 5, wherein the hardware attribute comprises one of bandwidth, power consumption and latency.

7. The system of any one of Claims 1 to 4, wherein the memory management module is configured to allocate memory space in the first memory or the second memory based on an application type of an application that issued the memory allocation request.

8. The system of any one of Claims 1 to 4, wherein the memory management module is configured to allocate memory space in the first memory or the second memory in response to the memory allocation request based on the values of a plurality of hardware attributes of the first memory and the second memory, wherein the plurality of hardware attributes comprise bandwidth, power consumption and/or latency of the first memory and the second memory.

9. The system of any one of Claims 1 to 4, wherein the memory management module is configured to allocate memory space in the first memory or the second memory in response to the memory allocation request based on the values of the hardware attribute of the first memory and the second memory, and based on a priority level of an application that issued the memory allocation request.

10. The system of any one of Claims 1 to 4, wherein the memory management module is configured, in response to determining that memory space should be allocated in the first memory in response to the memory allocation request from a first application having a first priority and determining that there is not enough free memory space available in the first memory to satisfy the memory allocation request from the first application, to migrate a buffer already allocated in the first memory for a second application having a second priority that is lower than the first priority to the second memory, and thereafter allocate memory space in the first memory to the first application in response to the memory allocation request.

11. The system of Claim 10, wherein the memory management module is further configured to subsequently migrate the buffer allocated for the second application back to the first memory when sufficient memory for the buffer becomes available in the first memory.

12. The system of any one of Claims 1 to 4, wherein the memory management module is configured, in response to determining that memory space should be allocated in the first memory in response to the memory allocation request from a first application having a first priority and determining that there is not enough free memory space available in the first memory to satisfy the memory allocation request from the first application, to kill a second application having a second priority that is lower than the first priority and that has memory space allocated in the first memory, and thereafter allocate memory space in the first memory to the first application in response to the memory allocation request.

13. The system of any one of Claims 1 to 12, wherein the first memory, the second memory, and the processor are provided in different semiconductor chips.

14. The system of Claim 13, wherein the first memory and the processor are provided in a first package, and wherein the second memory is provided in a second package that is separate from the first package.

15. The system of Claim 14, wherein the first memory is coupled to the processor by a through silicon via (TSV) interconnection.

16. The system of any one of Claims 1 to 15, wherein the processor and the first memory are provided in a package on package configuration.

17. The system of any one of Claims 1 to 16, wherein the first and second memories comprises dynamic random access memories (DRAMs).

18. The system of claim 17, wherein the first memory comprises a WIDE I/O DRAM and the second memory comprises a DRAM.

19. A mobile computing device, comprising:
the system according to any one of claims 1 to 18;
a display controller coupled to the processor; and
first and second memory controllers coupled to the processor,
wherein the first and second memories are first and second dynamic random access memories (DRAMs) coupled to respective ones of the first and second memory controllers.

20. The mobile computing device of Claim 19, wherein the first DRAM is a WIDE I/O DRAM and the second DRAM is a low power double data rate (LPDDR) DRAM.
